# EUROPÄISCHE PATENTANMELDUNG

(11) **EP 1 733 831 A1**
(43) Veröffentlichungstag der Anmeldung: **20.12.2006**
(21) Anmeldenummer: 05012852.9
(22) Anmeldetag: 15.06.2005
(51) Int. Cl.: B23D 45/12, B23D 61/02, B27B 5/32, B23D 61/10

(54) **Kreissägeblatt und Rohrtrennmaschine mit Kreissägeblatt**

(71) Anmelder: Georg Fischer Rohrverbindungstechnik GmbH, 78224 Singen (DE)
(72) Erfinder: Singer, Stefan, 78244 Gottmadingen (DE)
(74) Vertreter: Vetter, Ewald Otto

(57) **Zusammenfassung**

Es wird eine Rohrtrennmaschine (1) mit einem Kreissägeblatt (2) vorgeschlagen umfassend ein Schneckengetriebe (9), ein Schneckenrad (10) mit einer Spindel (4), einen Lagerdeckel (3), eine Klemmscheibe (5) und eine Mutter (6), wobei das Kreissägeblatt (2), die Spindel (4) und/oder der Lagerdeckel (3) zueinander passenden Ausnehmungen (15,18) und Vorsprünge (17) aufweisen. Das Kreissägeblatt (2) ist asymmetrisch ausgebildet.

## Beschreibung

Die Erfindung bezieht sich auf ein Kreissägeblatt und eine Rohrtrennmaschine mit Kreissägeblatt.

Zum Verbinden von Rohrleitungen werden im Rohrleitungsbau einzelne Rohrleitungsabschnitte mit einander oder mit Armaturen und/oder Fittings verschweisst. Hierzu ist es erforderlich, die Rohrleitungsenden auf das Schweissverfahren vorzubereiten. Die Rohrleitungsenden müssen möglichst senkrecht zur Rohrleitungsachse verlaufend getrennt werden und die Stirnseiten der Rohrleitungsenden müssen entsprechend dem Schweissverfahren mit einer Fase, einer abgeschrägten Fläche, vorbereitet werden. Hierzu werden Rohrtrennmaschinen mit Kreissägeblätter und mit am Rohrumfang umlaufenden Fräswerkzeugen eingesetzt. Das Sägeblatt und das Fräswerkzeug können dabei nur in einer Drehrichtung wirksam verwendet werden. Wenn die Werkzeuge seitenverkehrt eingesetzt werden, kann das Rohr oder das Rohrleitungsende nicht sauber bearbeitet werden und die Werkzeuge werden beschädigt und unbrauchbar.

Aus der DE 1171241 B ist eine gattungsgemässe Rohrtrennmaschine bekannt. Ein Elektromotor treibt über ein Schneckengetriebe ein Schneckenrad an. Auf die Spindel des Schneckenrades werden nacheinander ein mit mehreren Löchern versehenen Lagerdeckel, das Kreissägeblatt und eine Klemmscheibe aufgeschoben und mit einer Mutter festgeschraubt. Die Zentrierung des Sägeblattes, die für die Präzision des Schneidvorganges und für die Laufruhe der Trennmaschine von wesentlicher Bedeutung ist, wird erreicht durch den radialen Formschluss zwischen dem Aussendurchmesser der Spindel und dem Innendurchmesser des Sägeblattes. Das Sägeblatt kann dabei auf der Welle verdreht werden, es kann bei grosser mechanischer Belastung beim Bearbeiten durchrutschen, was erwünscht ist. Würde das Sägeblatt sich auf der Welle verkeilen, könnte es zerstört oder sehr schlecht von der Welle abgenommen werden.

Ausgehend von diesem Stand der Technik ist es Aufgabe der Erfindung, ein Rohrtrennmaschine mit Kreissägeblatt anzugeben, wobei das Sägeblatt nicht seitenverkehrt eingesetzt werden kann und wobei die Zentrierung des Sägeblattes auch ohne Formschluss in radialer Richtung gewährleistet ist.

Diese Aufgabe wird gelöst durch eine Rohrtrennmaschine mit einem Kreissägeblatt umfassend ein Schneckengetriebe, ein Schneckenrad mit einer Spindel, einen Lagerdeckel, eine Klemmscheibe und eine Mutter, wobei das Kreissägeblatt, die Spindel und/oder der Lagerdeckel zueinander passenden Ausnehmungen und Vorsprünge aufweisen.

Bevorzugte Weiterbildungen der Erfindung ergeben sich aus den abhängigen Ansprüchen.

Es ist von Vorteil, dass das Sägeblatt nicht seitenverkehrt eingesetzt werden kann. Dies wird dadurch erreicht, dass das Kreissägeblatt am Umfang des Zentralloches eine in radialer Richtung ausgebildete Ausnehmung bzw. einen in radialer Richtung ausgebildeten Vorsprung aufweist, wobei der Vorsprung eine Dicke aufweist, die wesentlich kleiner ist als die Dicke des Sägeblattes. Dies wird auch dadurch erreicht, dass das Kreissägeblatt benachbart zum Zentralloch einen in axialer Richtung ausgebildeten ringförmigen Vorsprung aufweist. Dies wird auch dadurch erreicht, dass das Sägeblatt einen in axialer Richtung ausgebildeten Zapfen aufweist. Weil die Zapfen und Vorsprünge auf einer Seite des Sägeblattes ausgebildet sind, wird das Sägeblatt asymmetrisch und kann nicht mehr seitenverkehrt eingesetzt werden.

Ausführungsbeispiele der Erfindung werden anhand der Figuren beschrieben. Es zeigen:
Figur 1 eine Sicht auf einen Teilbereich einer erfindungsgemässen Rohrtrennmaschine,
Figur 2 einen Schnitt durch den Teilbereich der erfindungsgemässe Rohrtrennmaschine von Figur 1,
Figur 3 eine Vergrösserung aus dem Teilbereich von Figur 2,
Figur 4 eine Sicht auf das Sägeblatt von Figur 1,
Figuren 5, 6 und 7 eine Sicht auf weitere Ausführungsbeispiele des erfindungsgemässen Sägeblattes.

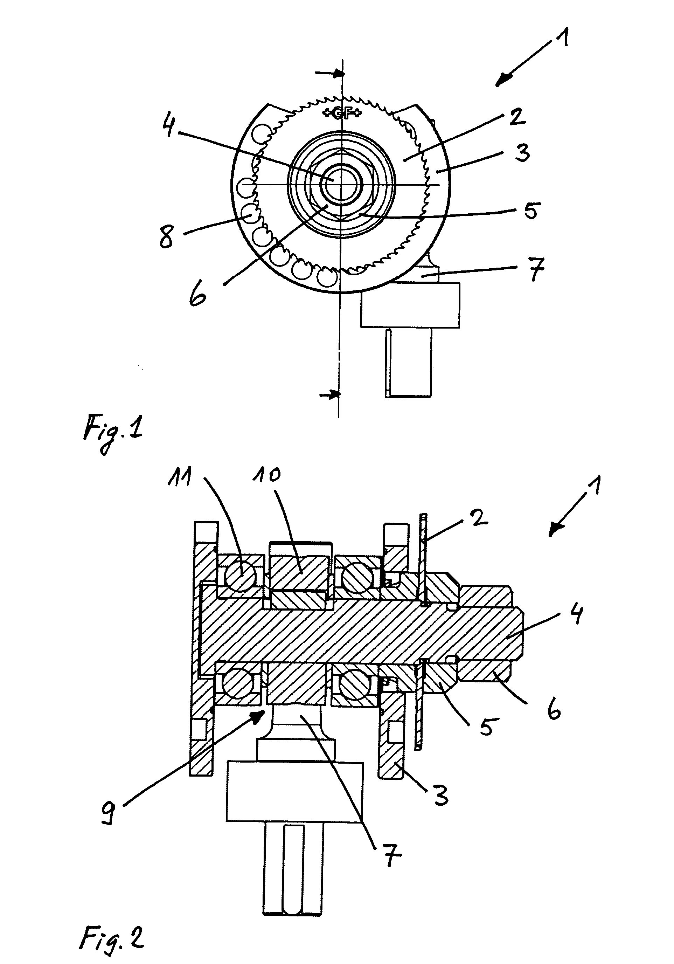

In Figur 1 ist ein Teilbereich einer Rohrtrennmaschine 1 dargestellt. Die Sicht beschränkt sich auf dem Schneidwerkzeug, hier dargestellt als ein Kreissägeblatt 2, einem Teil eines Lagerdeckels 3, einer Spindel 4, einer Klemmscheibe 5, einer Mutter 6 und einem Teil einer Antriebswelle 7 eines Elektromotors. Das Rohr selbst, die Spannvorrichtung für das zu bearbeitende Rohrende sowie die Führungsvorrichtung, die das Schneidwerkzeug 2 beim Bearbeitungsvorgang um das Rohrende herum führt, wurden weggelassen. Der Lagerdeckel 3 weist Löcher 8 auf, die dafür sorgen, das Kühlluft an das Kreissägeblatt 2 herangeführt wird.

In Figur 2 ist der Teilbereich der Rohrtrennmaschine 1 geschnitten entlang der Achse der Spindel 4 dargestellt. Aus Figur 2 ist ersichtlich, wie der Antrieb des Schneidwerkzeuges 2 über ein Schneckengetriebe 9 ausgeführt wird. Die Spindel 4 ist mit einem Schneckenrad 10 verbunden und in einem Kugellager 11 drehbar gelagert angeordnet. Zur Befestigung des Kugellagers 11 und des Schneckenrades 10 ist eine Pressbuchse 12 vorgesehen, die das Kugellager 11 und das Schneckenrad 10 auf die Spindel 4 presst. Das Kreissägeblatt 2 wird eingeklemmt zwischen der Pressbuchse 12 und der Klemmscheibe 5.

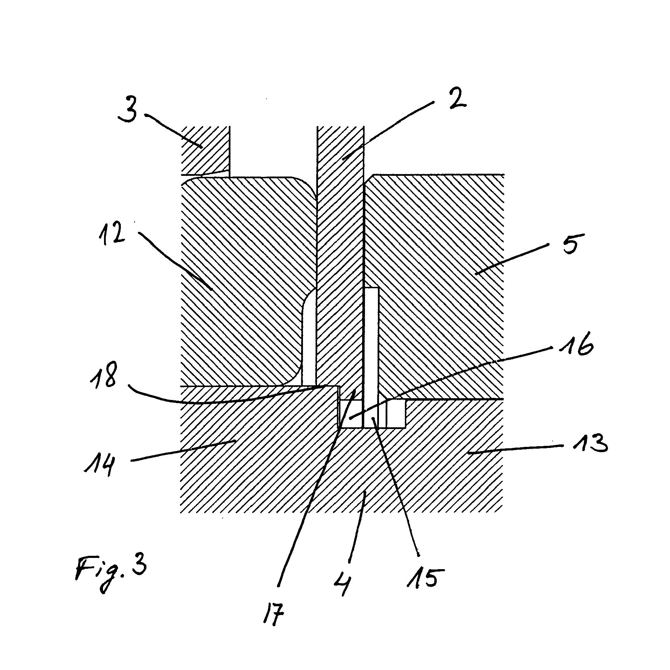

In Figur 3 sind der Befestigungsbereich des Kreissägeblattes 2 und der Spindel 4 vergrössert dargestellt. Die Spindel 4 weist in einem vorderen Bereich 13 einen kleineren Spindeldurchmesser auf als in einem hinteren Bereich 14. Zwischen dem vorderen Bereich 13 und dem hinteren Bereich 14 weist die Spindel 4 eine rundum verlaufend angeordnete Nut 15 oder Ausnehmung auf. Das Kreissägeblatt 2 weist am Umfang des Zentralloches 16 eine Stufe auf, die gebildet wird durch einen Vorsprung 17 und eine Ausnehmung 18. Der Vorsprung 17 kann ringförmig, d.h. am gesamten Umfang des Zentralloches 16, oder bereichsweise geteilt, d. h. wie nach Innen weisenden Fingern 17 ausgebildet sein. Die Befestigung des Kreissägeblattes 2 wird durch die Klemmwirkung zwischen Pressbuchse 12 und Klemmscheibe 5 erreicht. Im Beispiel von Figur 3 weist das Kreissägeblatt 2 im Zentralloch 16 eine Ausnehmung 18 auf, die genau passend zum Aussendurchmesser der Spindel 4 im hinteren Bereich 14 ausgebildet ist. Hiermit wird eine Zentrierung des Kreissägeblattes 2 erreicht.

Die rundum verlaufend angeordnete Nut 15 zwischen dem vorderen Bereich 13 und dem hinteren Bereich 14 der Spindel 4 weist eine Breite auf, die grösser ist als die Dicke des Kreissägeblattes 2. Hiermit wird erreicht, dass auf der gleichen Rohrtrennmaschine 1 auch ein Fräswerkzeug mit einer grösseren Dicke als die Dicke des Kreissägeblattes 2 eingesetzt werden kann. Der vordere Bereich 13 der Spindel 4 weist einen handelsüblichen, genormten Aussendurchmesser auf, sodass hier auch handelsübliche Fräswerkzeuge aufgebracht und zentriert werden können. Das Fräswerkzeug kann auch kombiniert mit dem Kreissägeblatt 2 auf die Spindel 4 aufgebracht werden.

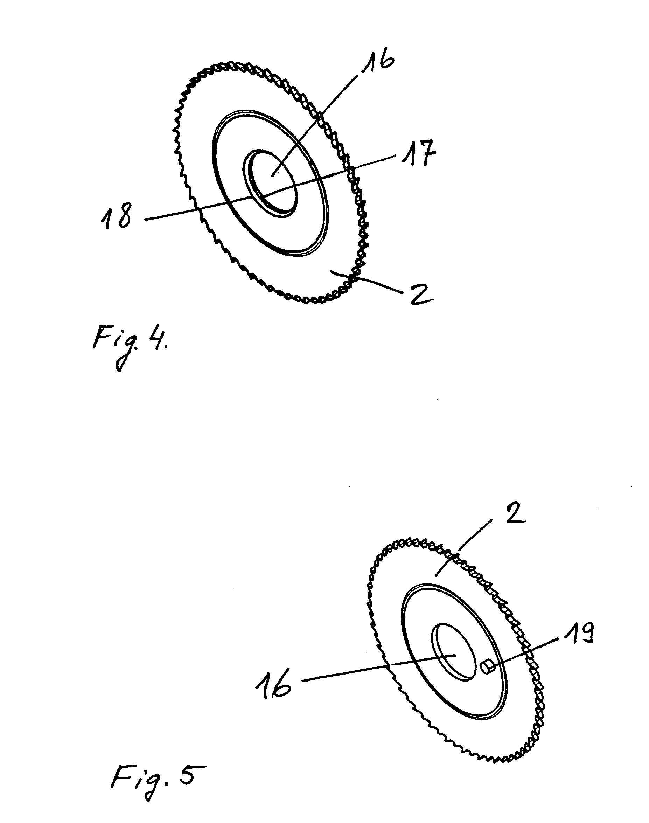

In Figur 4 ist das Kreissägeblatt 2 von Figuren 1 bis 3 perspektivisch dargestellt.

In den Figuren 5 bis 7 sind weitere Ausführungsbeispiele des erfindungsgemässen Sägeblattes 2 dargestellt. In Figur 5 weist das Sägeblatt 2 einen Zapfen 19 auf. Am Lagerdeckel 3 oder an der Pressbuchse 12 für den Lagerdeckel ist eine ringförmige Nut vorgesehen, die auf dem gleichen Radius um die Drehachse der Spindel 4 und des Sägeblattes 2 angeordnet ist wie der Zapfen 19. Dadurch wird erreicht, dass der Zapfen 19 in die Nut passt. Weil die Nut ringförmig ausgebildet ist, wird eine Zentrierung des Sägeblattes ohne Formschluss erreicht. Weil der Zapfen 19 lediglich auf einer Seite des Sägeblattes 2 ausgebildet ist, kann bei einem seitenverkehrten Einbau das Sägeblatt nicht zentriert werden. Der seitenrichtige Einbau des Sägeblattes 2 wird durch diese asymmetrische Ausführung erleichtert.

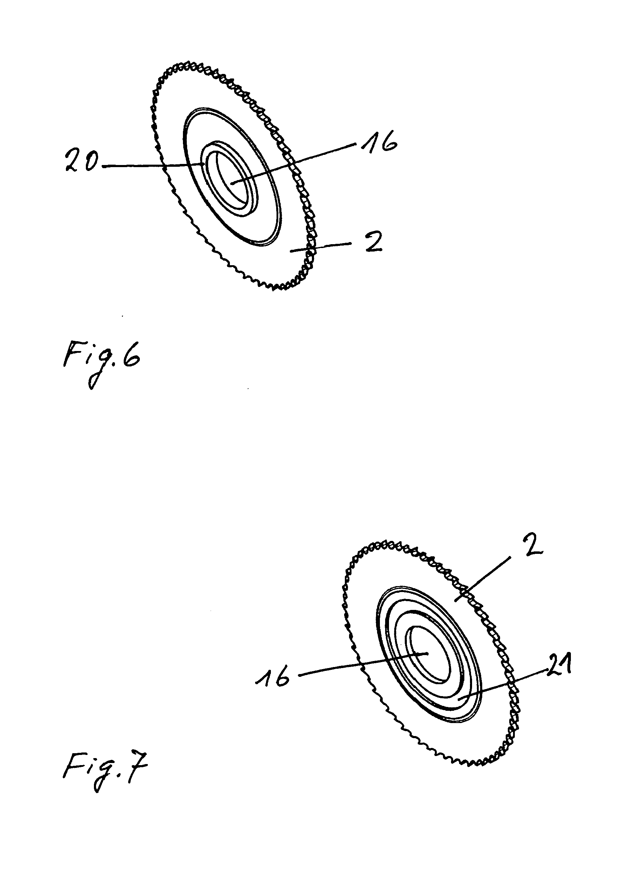

Im Ausführungsbeispiel von Figur 6 weist das Sägeblatt 2 auf der einen Seite einen ringförmigen Vorsprung oder Ansatz 20 auf. Zu diesem Ansatz 20 wird am Lagerdeckel 3 oder an der Pressbuchse 12 für den Lagerdeckel eine dazupassenden Ausnehmung ausgebildet. Auch hier dient die Kombination von Ansatz 20 und Ausnehmung dazu, dass das Sägeblatt 2 seitenrichtig und zentriert eingebaut werden kann. Es wird jedoch keinen Formschluss zwischen Sägeblatt 2 und Pressbuchse 12 erreicht. Verbindungen mit Formschluss neigen bei Rohrtrennmaschinen zu Beschädigungen am Sägeblatt 2 im Bereich des Zentralloches 16 und an dem Aussenumfang der Spindel 4.

Im Ausführungsbeispiel von Figur 7 weist das Sägeblatt 2 keinen Ansatz, sondern eine ringförmige Nut 21 auf. Zu dieser Nut 21 wird am Lagerdeckel 12 oder an der Pressbuchse 12 eine passende ringförmige Ausnehmung ausgebildet. Auch so wird eine gute Zentrierung ohne radialen Formschluss erreicht und einen seitenverkehrten Einbau des asymmetrischen Kreissägeblattes 2 verhindert.

Die hier aufgeführten Ausführungsbeispiele können auch untereinander kombiniert werden. Das Kreissägeblatt 2 könnte zusätzlich zum Vorsprung 17, der kreisförmig um das Zentralloch 16 ausgebildet, weitere Vorsprünge 19 oder Zapfen 20 aufweisen. Der Kreis, der um das Zentralloch 16 ausgebildet ist und der den Vorsprung 17 gegenüber dem Zentralloch 16 abgrenzt, entspricht einem Normdurchmesser, beispielsweise 16 mm. Weil die Begrenzung zum Zentralloch 16 kreisrund ist, ist eine gute Zentrierung ohne radialen Formschluss möglich. Das Kreissägeblatt 2 könnte auch auf beiden Seiten des Vorsprunges 17 Ausnehmungen 18 aufweisen. Hiermit wird erreicht, dass das Sägeblatt 2 ohne radialen Formschluss auch in Rohrtrennmaschinen eingesetzt werden kann, die auf der gleichen Antriebswelle zwei Einbaumöglichkeiten für das Trennwerkzeug, auf beiden Seiten des Schneckengetriebes 9 haben. Kennzeichnend ist jedoch immer, dass das Sägeblatt 2 zwar zentriert, jedoch ohne Formschluss in radialer Richtung eingebaut werden kann. Bei einer asymmetrischen Ausbildung des Kreissägeblattes 2 wird der seitenrichtige Einbau erheblich erleichtert.

## Patentansprüche

1. Kreissägeblatt (2) mit einem Zentralloch (16) und mit einer Spannvorrichtung umfassend zumindest ein Lagerdeckel (3) und eine Klemmscheibe (5), **dadurch gekennzeichnet, dass** das Kreissägeblatt (2) asymmetrisch ausgebildet ist, derart, dass die Spannvorrichtung und das Kreissägeblatt (2) zueinander passenden Ausnehmungen (15,18) und/oder Vorsprünge (17) aufweisen.

2. Kreissägeblatt (2) mit einer Spannvorrichtung nach Anspruch 1, **dadurch gekennzeichnet, dass** das Sägeblatt (2) mindestens einen kreisförmig um das Zentralloch (16) ausgebildeten Vorsprung (17) aufweist, wobei der Kreis um das Zentralloch (16) einen Normdurchmesser entspricht.

3. Kreissägeblatt (2) mit einer Spannvorrichtung nach mindestens einem der Ansprüche 1 oder 2, **dadurch gekennzeichnet, dass** das Sägeblatt (2) mindestens eine kreisförmig um das Zentralloch (16) ausgebildete Ausnehmung (18) und/oder weitere Vorsprünge (19,20) aufweist.

4. Rohrtrennmaschine (1) mit einem Kreissägeblatt (2) umfassend ein Schneckengetriebe (9), ein Schneckenrad (10) mit einer Spindel (4), einen Lagerdeckel (3), eine Klemmscheibe (5) und eine Mutter (6), **dadurch gekennzeichnet, dass** das Kreissägeblatt (2), die Spindel (4) und/oder der Lagerdeckel (3) zueinander passenden Ausnehmungen (15,18) und Vorsprünge (17) aufweisen.

5. Rohrtrennmaschine (1) mit einem Kreissägeblatt (2) nach dem Anspruch 4, **dadurch gekennzeichnet, dass** das Kreissägeblatt (2) am Umfang des Zentralloches (16) eine in radialer Richtung ausgebildete Ausnehmung (18) bzw. einen in radialer Richtung ausgebildeten Vorsprung (17) aufweist, wobei der Vorsprung (17) eine Dicke aufweist, die wesentlich kleiner ist als die Dicke des Sägeblattes (2).

6. Rohrtrennmaschine (1) mit einem Kreissägeblatt (2) nach mindestens einem der Ansprüche 4 oder 5, **dadurch gekennzeichnet, dass** das Kreissägeblatt (2) benachbart zum Zentralloch (16) einen in axialer Richtung ausgebildeten ringförmigen Vorsprung (20) aufweist.

7. Rohrtrennmaschine (1) mit einem Kreissägeblatt (2) nach mindestens einem der Ansprüche 4 bis 6, **dadurch gekennzeichnet, dass** das Sägeblatt (2) einen in axialer Richtung ausgebildeten Zapfen (19) aufweist.

8. Rohrtrennmaschine (1) mit einem Kreissägeblatt (2) nach mindestens einem der Ansprüche 4 bis 7, **dadurch gekennzeichnet, dass** zur Befestigung des Lagerdeckels (3) eine Pressbuchse (12) vorgesehen ist.

9. Rohrtrennmaschine (1) mit einem Kreissägeblatt (2) nach mindestens einem der Ansprüche 4 bis 8, **dadurch gekennzeichnet, dass** die Stirnseite der Pressbuchse (12) in axialer Richtung ausgebildete und zu den axialen Vorsprüngen (20) und/oder Zapfen (19) des Sägeblattes (2) passende ringförmige Ausnehmungen aufweist.

10. Rohrtrennmaschine (1) mit einem Kreissägeblatt (2) nach mindestens einem der Ansprüche 4 bis 9, **dadurch gekennzeichnet, dass** die Spindel (4) eine in radialer Richtung ausgebildete ringförmige Ausnehmung (15) aufweist.
